# EUROPÄISCHE PATENTANMELDUNG

(11) **EP 1 570 729 A1**
(43) Veröffentlichungstag der Anmeldung: **07.09.2005**
(21) Anmeldenummer: 05004482.5
(22) Anmeldetag: 01.03.2005
(51) Int. Cl.: A01J 5/08

(54) **Zitzengummi für Zweiraummelkbecher**

(30) Priorität: 03.03.2004 DE 102004010375
(71) Anmelder: Happel, Fritz, D-87650 Baisweil (DE)
(72) Erfinder: Happel, Fritz, D-87650 Baisweil (DE)
(74) Vertreter: Manitz, Finsterwald & Partner GbR

(57) **Zusammenfassung**

Es wird ein Zitzengummi für Zweiraummelkbecher beschrieben, bei dem die Längssteifigkeit der Zitzengummiwand (5) in dem der Zitze zugeordneten Massagebereich erheblich höher ist als die Steifigkeit des Zitzengummis in der radial nach innen gerichteten Faltrichtung.

## Beschreibung

Die Erfindung betrifft einen Zitzengummi für Zweiraummelkbecher, in denen der beidendig eingespannte Zitzengummi periodisch einem Differenzdruck zwischen Zitzengummiinnenraum und dem zwischen Zitzengummi und Melkbecher vorhandenen Zwischenraum ausgesetzt ist.

Die auf die Zitzen ausgeübte Massagewirkung der Zitzengummis in Zweiraummelkbechern beruht auf den Differenzdruckänderungen zwischen Zitzengummiinnenraum und Zwischenraum zwischen Zitzengummi und Melkbecher, die zu einem periodischen Kollabieren des Zitzengummis führen.

Man ist heutzutage beim Maschinenmelken bestrebt, mit möglichst niedrigem Vakuum zu melken, da die schädliche Einwirkung des Vakuums auf die Zitze allgemein bekannt ist. Eine Absenkung des Melkvakuums führt aber zwangsläufig dazu, dass auch eine Verringerung des zur Zitzenmassage genutzten Differenzdrucks erfolgt und dadurch die Massagewirkung verschlechtert wird.

Um den niedrigeren Differenzdruck dennoch für die Massage brauchbar nutzen zu können, ist es bekannt, den Einfaltwiderstand der Zitzengummis zu vermindern, indem der Zitzengummi dünnwandiger gestaltet wird. Die Dünnwandigkeit des Zitzengummis hat jedoch den Nachteil, dass sich dieser dünnwandige Zitzengummi im Massagetakt unter dem wirksamen Differenzdruck an den unteren Teil der Zitze anschmiegt, ohne diese dabei wirksam zu massieren. Die erwünschte Verringerung des an der Zitze wirksamen Vakuums wird somit mit einer unerwünschten Verschlechterung der Massage der Zitze während des Massagetakts erkauft.

Aufgabe der Erfindung ist es, einen Zitzengummi in der Weise auszugestalten, dass insbesondere auch bei niedrigem Vakuum und der damit verbundenen Verringerung des ausnutzbaren Differenzdrucks eine gute Massage der Zitze sichergestellt ist.

Gelöst wird diese Aufgabe nach der Erfindung im Wesentlichen dadurch, dass die Längssteifigkeit der Zitzengummiwand in dem der Zitze zugeordneten Massagebereich erheblich höher ist als die Steifigkeit des Zitzengummis in der radial nach innen gerichteten Faltrichtung.

Mit einem derart ausgestalteten Zitzengummi ist es möglich, den unterhalb der Zitze vorliegenden größten Differenzdruck auszunutzen, um das sich in diesem Bereich ergebende ausgeprägte Kollabieren des Zitzengummis aufgrund der gewählten Steifigkeitsrelationen durch die erreichte Druckversetzung äußerst wirksam auf die Zitze zu übertragen und eine gute Massage der Zitze zu gewährleisten.

Vorzugsweise ist eine Mehrzahl von sich insbesondere etwa vom Bereich der oberen Einspannung des Zitzengummis in Längsrichtung bis zumindest zur halben Einspannlänge und vorzugsweise sich darüber hinaus erstreckenden, durch Dickwandbereiche gebildeten Massageleisten vorgesehen, die zumindest in Umfangsrichtung des Zitzengummis jeweils an Dünnwandbereiche angrenzen, wodurch der gewünschte geringe Einfaltwiderstand vorgegeben werden kann.

Durch diese Ausgestaltung wird es möglich, bei einem sehr niedrigen Einfaltwiderstand eine besonders wirksame Übertragung von differenzdruckgesteuerten Massagekräften auf die Zitze zu gewährleisten. Die durch Verdickungen der Zitzengummiwand, insbesondere nach außen erfolgende Verdickungen der Zitzengummiwand gebildeten Massageflächen oder Massagestreifen können sich prinzipiell axial bis zu den beiden Einspannenden des Zitzengummis in der Melkbecherhülse erstrecken, aber vorzugsweise werden diese Massagebereiche nur von der oberen, d.h. von der kopfseitigen Einspannstelle bis zur halben Einspannlänge bzw. etwas darüber hinaus, d.h. bis in den Bereich des unteren Drittels geführt. Die Massageflächen besitzen vorzugsweise Längsrillen oder Längsnuten, die in der Tiefe etwa der Dicke der zur Faltung vorgesehenen Dünnwandflächen entsprechen. Diese Maßnahmen ergeben zusammen einen extrem niedrigen Einfaltwiderstand.

Im Querschnitt gesehen befinden sich bevorzugt zwei dieser Massageflächen gegenüber, auf beiden Seiten flankiert von Dünnwandflächen, die den angestrebten extrem niedrigen Einfaltdruck bewirken. Bei dieser Konstruktion muss die Einfaltrichtung parallel zu den Massageflächen gewährleistet sein. Dies kann dadurch geschehen, dass der Zitzengummi im Querschnitt oval gestaltet wird, mit seiner größten Länge parallel zu den Massageflächen. Eine weitere Möglichkeit besteht darin, dass die Massageflächen mit dem Rücken nahezu an der Innenwand der Melkbecherhülse anliegen, so dass ein falsches Kollabieren verhindert wird.
Nur für den Fall, dass der Zitzengummi ringsum mit Massageflächen ausgestattet ist, die Längsrillen oder Längsnuten besitzen, ist eine Vorgabe der Einfaltrichtung nicht erforderlich.

Nach einer weiteren vorteilhaften Ausgestaltung des erfindungsgemäßen Zitzengummis wird dieser Zitzengummi in einen oberen, dem Zitzengummikopf zugewandten Massageteil mit den bereits beschriebenen Massageflächen und einem unteren Teil aufgeteilt, der mit dünner Wandung ausgeführt ist, um einen Abschluss des Innenraums vom Dauervakuum zu erreichen. Die Wandungsstärke wird dabei so gering gewählt, dass sich eine möglichst enge seitliche Schlaufenbildung beim Kollabieren dieses unteren Zitzenschlauchteiles ergibt, die je nach Wandstärke nur einen gedrosselten Durchtritt von Vakuum zum Zitzengummiinnenraum im Massagetakt erlaubt.
So kann bereits bei einem niedrigen Milchfluss von beispielsweise 0,5 l/min eine Entlastung im Innenraum vom Vakuum in Richtung Atmosphärendruck erreicht werden. Auch in diesem Falle sollten sich die Massageflächen mindestens bis zur Mitte der Einfaltlänge und vorzugsweise etwas darüber hinaus bis in den Bereich des unteren Drittels erstrecken, um die bereits geschilderte Hebekraftübertragung zur Erzielung einer guten Zitzenmassage sicherzustellen.

Soll eine Entlastung in dem unterhalb der Zitze gelegenen Innenraum vom Vakuum bereits ohne Milchfluss erreicht werden, so können bekannte Abschlusshilfen, z.B. Spreizstück gemäß DE-A-1 296 807, verwendet werden.

In einer besonders vorteilhaften Ausführungsform wird der Innenraum des erfindungsgemäßen Zitzengummis in bekannter Weise mit Atmosphäre über eine Düse belüftet. Dies kann sowohl vom Zitzengummikopf aus als auch von der unteren Einspannstelle her erfolgen.

Weitere vorteilhafte Merkmale und Ausgestaltungen der Erfindung sind in den Unteransprüchen angegeben und werden nachfolgend auch noch erläutert.

Ein Ausführungsbeispiel der Erfindung wird nachfolgend anhand der Zeichnung erläutert; in der Zeichnung zeigt:
- Fig. 1: eine schematische Längsschnittdarstellung eines in einem Melkbecher eingespannten Zitzengummis gemäß einer Ausführungsform der Erfindung,
- Fig. 2: eine Schnittdarstellung entlang der Linie C-D von Fig. 1, und
- Fig. 3: eine Schnittdarstellung entsprechend der Linie A-B in Fig. 1.

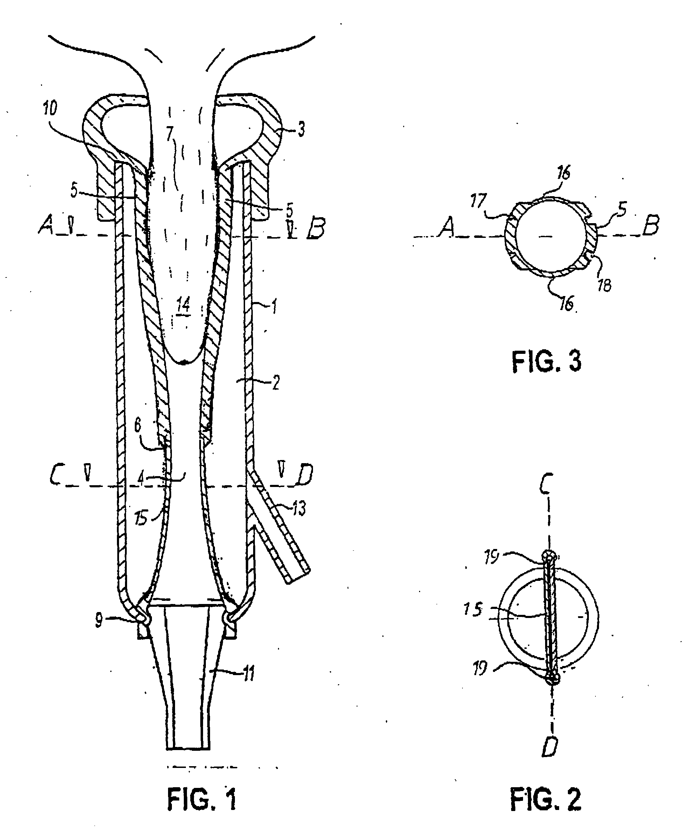

Nach Fig. 1 ist eine Zitze durch den Zitzengummikopf 3 in den gemäß einer Ausführungsvariante der Erfindung ausgestalteten Zitzengummi eingeführt und liegt einschließlich des Zitzenunterteils 14 zwischen den Massageflächen 5, deren Einfaltwiderstand vorzugsweise durch die Längsrillen 17 oder Längsnuten 18 reduziert ist. Der stärkste Differenzdruck entsteht unterhalb der Zitzenspitze zwischen dem Innenraum 4 und dem Zwischenraum 2.

Beim Beginn des Massagetakts, d.h. dann, wenn über den Stutzen 13 der Zwischenraum 2 mit Atmosphäre verbunden ist, beginnt durch den Differenzdruck zum Vakuum im Innenraum 4 der Zitzengummi zu kollabieren.

Die verstärkten Massageflächen 5 erstrecken sich in diesem Beispiel vom Bereich der oberen Einspannung bis zu dem Punkt 6, der deutlich unterhalb der halben Einspannlänge des Zitzengummis liegt. Der seitliche Dünnwandbereich 16, der sich in seinen unterschiedlichen Ausgestaltungen bevorzugt etwa über die Einspannlänge des Zitzengummis erstreckt, dient der Erzielung eines extrem niedrigen Einfaltwiderstands. Der untere Dünnwandschlauchteil 15 dient dem Abschluss des Innenraums 4 vom Vakuum wie in Schnitt C-D in Fig. 2 gezeigt.

Die Dicke des Dünnwandbereichs 16 und die Dicke der Wandung des Schlauchteils 15 können verschieden sein.

Es ist deutlich, dass durch die verstärkten Massageflächen, ihre Gestaltung und ihre Längserstreckung der Bereich des größten Differenzdrucks zwischen Innenraum 4 und Zwischenraum 2 ausgenutzt wird. Die quer zur ihrer Längserstreckung nur eine geringe Flexibilität aufweisenden Massageflächen wirken nach Art eines an einem Ende zitzennah gelagerten und am anderen Ende durch den größten Differenzdruck jeweils maximal ausgelenkten Hebels, wodurch auf die jeweilige Zitze durch die Hebelübertragung ausgeprägte Massagekräfte ausgeübt werden.

Fig. 3 zeigt den Schnitt A-B, aus dem die Gestaltung der Dünnwandfläche 16 und der Massageflächen 5 mit den Längsrillen 17 oder Längsnuten 18 ersichtlich ist. Letztere sind als Falthilfen zu verstehen. Die Tiefe dieser Rillen oder Nuten ist so gewählt, dass die bezüglich der Rillen oder Nuten bodenseitige Restwandstärke in etwa der Dicke der Dünnwandfläche 16 entspricht.
Diese Längsprofilierung der Massageflächen ergibt zusammen mit der Dünnwandfläche 16 einen extrem niedrigen Einfaltwiderstand. Die Formgestaltung der Längsrillen 17 oder Längsrillen 18 kann vorteilhafterweise so erfolgen, dass bei der Massage, d.h. dann, wenn die Massageflächen durch den Differenzdruck und die ausgenützte Hebelwirkung an der Zitze 14 anliegen, eine praktisch geschlossene Massagefläche vorliegt, d.h. die Längsrillen 17 oder Längsnuten 18 sind dabei geschlossen und ihre Seitenflächen liegen aneinander an.

Die bereits erwähnte Fig. 2 zeigt im Schnitt die Situation des Abschlusses des dünnwandigen Schlauchteils 15 im unteren Bereich des Zitzengummis. Durch die differenzdruckbedingte Schlaufenbildung im endseitigen Bereich entstehen im Massagetakt Verbindungskanäle 19 zum Innenraum 4, deren freie Querschnitte durch Wahl der Dicke des Schlauchteils 15 vorgegeben werden können. Die Dicke des Schlauchteils 15 kann unabhängig von der zitzenseitigen Dünnwand 16 gewählt werden.

### Bezugszeichenliste

- 1: Melkbecherhülse
- 2: Zwischenraum
- 3: Zitzengummikopf
- 4: Innenraum
- 5: Massagefläche
- 6: Länge der Massagefläche
- 7: Zitze
- 9: untere Einspannung
- 10: obere Einspannung
- 11: Schauglas
- 13: Stutzen
- 15: untere Dünnwand
- 16: seitliche Dünnwand
- 17: Längsrille in Massagefläche
- 18: Längsnut in Massagefläche
- 19: Abschlussöffnungen

## Patentansprüche

1. Zitzengummi für Zweiraummelkbecher, in denen der beidendig eingespannte Zitzengummi periodisch einem Differenzdruck zwischen Zitzengummiinnenraum und dem zwischen Zitzengummi und Melkbecher vorhandenen Zwischenraum ausgesetzt ist,
**dadurch gekennzeichnet, dass** die Längssteifigkeit der Zitzengummiwand in dem der Zitze zugeordneten Massagebereich erheblich höher ist als die Steifigkeit des Zitzengummis in der radial nach innen gerichteten Faltrichtung.

2. Zitzengummi nach Anspruch 1,
**dadurch gekennzeichnet, dass** eine Mehrzahl von sich insbesondere etwa vom Bereich der oberen Einspannung des Zitzengummis in Längsrichtung bis zumindest zur halben Einspannlänge erstreckenden, durch Dickwandbereiche gebildeten Massageleisten vorgesehen ist, die zumindest in Umfangsrichtung des Zitzengummis jeweils an Dünnwandbereiche angrenzen.

3. Zitzengummi nach Anspruch 1 oder 2,
**dadurch gekennzeichnet, dass** die streifenförmig oder flächig ausgebildeten Massageleisten einander jeweils diametral gegenüberliegend angeordnet sind, wobei die an die Massageleisten angrenzenden und/oder sie umschließenden Dünnwandbereiche eine Wandstärke besitzen, die einem Bruchteil der Wandstärke der Massageleisten entspricht.

4. Zitzengummi nach einem der vorhergehenden Ansprüche,
**dadurch gekennzeichnet, dass** zwei einander diametral gegenüberliegende flächige Massagebereiche mit erhöhter Wandstärke vorgesehen sind, wobei diese Massagebereiche über Dünnwandbereiche miteinander verbunden sind und sich in Längsrichtung erstreckende Nuten oder Rillen die dickwandigen Massagenbereiche in eine Mehrzahl von Massagestreifen unterteilen.

5. Zitzengummi nach Anspruch 4,
**dadurch gekennzeichnet, dass** die Dicke der Zitzenwandung im Bereich des zwischen den Massageleisten gelegenen Nut- oder Rillenbodens etwa gleich der Dicke von Dünnwandbereichen ist.

6. Zitzengummi nach einem der vorhergehenden Ansprüche,
**dadurch gekennzeichnet, dass** bei einem Zitzengummimaterial von 55 Shore die die Einfaltbewegung gewährleistenden Dünnwandflächen vorzugsweise eine Dicke von 1 bis 1,5 mm und die Massagebereiche vorzugsweise eine Dicke von etwa 2,5 bis 3 mm besitzen.

7. Zitzengummi nach einem der vorhergehenden Ansprüche,
**dadurch gekennzeichnet, dass** der Zitzengummi zumindest in einem Teilbereich seiner Länge einen oval gestalteten Querschnitt aufweist, wobei die Massageflächen den langen Wandabschnitten zugeordnet sind.

8. Zitzengummi nach einem der vorhergehenden Ansprüche,
**dadurch gekennzeichnet, dass** zur Vorgabe einer definierten Einfaltrichtung die Massageflächen mit ihrem Rücken nahezu an der Innenwand des Melkbechers anliegen.

9. Zitzengummi nach einem der vorhergehenden Ansprüche,
**dadurch gekennzeichnet, dass** der unterhalb der Massageflächen gelegene Bereich des Zitzengummis als Dünnwandbereich ausgebildet ist, dessen Wandungsstärke unabhängig von der Wandungsstärke der mit den Massageflächen zusammenwirkenden Dünnwandbereichen vorgebbar ist.

10. Zitzengummi nach einem der vorhergehenden Ansprüche,
**dadurch gekennzeichnet, dass** die die Massageflächen im Massagestreifenbereiche aufteilenden Längsnuten oder Längsrillen so bemessen und geformt sind, dass die Nuten oder Rillen im Einfaltzustand geschlossen sind und dabei eine in sich stabile Massagefläche gebildet wird.

11. Zitzengummi nach einem der vorhergehenden Ansprüche,
**dadurch gekennzeichnet, dass** die Massageflächen oder Massagestreifen aus radial nach außen verdickten Zitzengummibereichen bestehen.
